(19) Europäisches Patentamt
European Patent Office
Office européen des brevets

(11) **EP 2 833 477 A1**

(12) **EUROPEAN PATENT APPLICATION**
published in accordance with Art. 153(4) EPC

(43) Date of publication:
**04.02.2015 Bulletin 2015/06**

(51) Int Cl.:
*H01Q 9/02* (2006.01)          *G06K 19/07* (2006.01)
*H01Q 1/38* (2006.01)          *H01Q 7/00* (2006.01)

(21) Application number: **12873036.3**

(22) Date of filing: **30.03.2012**

(86) International application number:
**PCT/JP2012/058733**

(87) International publication number:
**WO 2013/145311 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FUJITSU LIMITED**
**Kawasaki-shi**
**Kanagawa 211-8588 (JP)**

(72) Inventor: **KAI, Manabu**
**Kawasaki-shi**
**Kanagawa 211-8588 (JP)**

(74) Representative: **Reichl, Philipp**
**Haseltine Lake LLP**
**5th Floor**
**Lincoln House**
**300 High Holborn**
**London WC1V 7JH (GB)**

(54) **RFID TAG**

(57)     To provide a RFID tag by which costs are reduced.

An RFID tag includes a substrate; a pair of first antenna elements formed on one side of the substrate; an IC chip connected between the pair of first antenna elements; a second antenna element formed on another side of the substrate; a pair of first connection parts formed between the pair of first antenna elements and the second antenna element, the pair of first connection parts forming a first loop with the pair of first antenna elements, the IC chip, and the second antenna element; and a pair of second connection parts formed between the pair of first antenna elements and the second antenna element, the pair of second connection parts forming a second loop, which is longer than the first loop, with the pair of first antenna elements, the IC chip, and the second antenna element, wherein a length of the first loop and a length of the second loop are respectively shorter than a wavelength in a usable frequency.

FIG.3A

**Description**

TECHNICAL FIELD

The present invention is related to a RFID (Radio Frequency Identifier) tag.

BACKGROUND ART

Conventionally, there has been an antenna device, in which a pair of front side conductors provided on the front side of a dielectric body, and a pair of back side conductors provided on the back side of a dielectric body, are connected by a via hole conductor or a through hole conductor. On the back side of the dielectric body, a neutral conductor is provided between the pair of back side conductors.

Prior Art

Patent document

Patent Document 1: Japanese Laid-Open Patent Publication No. 2006-053833

Disclosure of the Invention

Problems to be Solved by the Invention

However, in a conventional antenna device, costs are not sufficiently reduced.
Thus, an objective is to provide a RFID tag by which costs are reduced.

MEANS TO SOLVE THE PROBLEMS

An RFID tag according to an embodiment of the present invention includes a substrate; a pair of first antenna elements formed on one side of the substrate; an IC chip connected between the pair of first antenna elements; a second antenna element formed on another side of the substrate; a pair of first connection parts formed between the pair of first antenna elements and the second antenna element, the pair of first connection parts forming a first loop with the pair of first antenna elements, the IC chip, and the second antenna element; and a pair of second connection parts formed between the pair of first antenna elements and the second antenna element, the pair of second connection parts forming a second loop, which is longer than the first loop, with the pair of first antenna elements, the IC chip, and the second antenna element, wherein a length of the first loop and a length of the second loop are respectively shorter than a wavelength in a usable frequency.

EFFECTS OF THE INVENTION

It is possible to provide a RFID tag by which costs are reduced.

BRIEF DESCRIPTION OF DRAWINGS

FIG. 1A is a perspective diagram indicating RFID tags 10 and 10A according to comparative example 1;
FIG. 1B is a perspective diagram indicating RFID tags 10 and 10A according to comparative example 1;
FIG. 1C indicates an equivalent circuit of the RFID tag 10 of comparison example 1;
FIG. 2A is a perspective diagram indicating RFID tags 10B and 10C according to comparative example 2;
FIG. 2B is a perspective diagram indicating RFID tags 10B and 10C according to comparative example 2;
FIG. 2C indicates an equivalent circuit of the RFID tag 10B of comparison example 2;
FIG. 3A is a perspective diagram indicating a RFID tag 100 according to a first embodiment;
FIG. 3B indicates an equivalent circuit of the RFID tag 100 according to the first embodiment;
FIG. 4 is a perspective diagram indicating the RFID tag 10D for comparison, in which the number of vias 34A, 35A of the RFID tag 10A of comparison example 1 is reduced to two vias;
FIG. 5 is a diagram indicating a first loop and a second loop of a RFID tag 100 according to the first embodiment;
FIG. 6A is a perspective diagram indicating a RFID tag 200 according to a second embodiment;

FIG. 6B is an enlarged view indicating a capacitor 240 of the RFID tag 200 according to the second embodiment;
FIG. 6C is an enlarged view indicating the capacitor 50 of the RFID tag 10B according to comparison example 2;
FIG. 7A is a diagram indicating an equivalent circuit of the RFID tag 200 according to the second embodiment;
FIG. 7B is a diagram indicating a first loop and a second loop of the RFID tag 200 according to the second embodiment;
FIG. 8A is a perspective diagram indicating a RFID tag 300 according to a third embodiment;
FIG. 8B is a perspective diagram indicating a RFID tag 400 according to a fourth embodiment;
FIG. 9A is a perspective diagram indicating a RFID tag 500 according to a fifth embodiment; and
FIG. 9B is a perspective diagram indicating a RFID tag 600 according to a sixth embodiment.

## MODES FOR CARRYING OUT THE INVENTION

In the following, a description is given of an embodiment in which a RFID tag according to the present invention is applied.

Before describing the RFID tag according to an embodiment, a description is given of problems of a RFID tag according to a comparison example, by using RFID tags according to comparison examples 1, 2.

<Comparison Example 1>

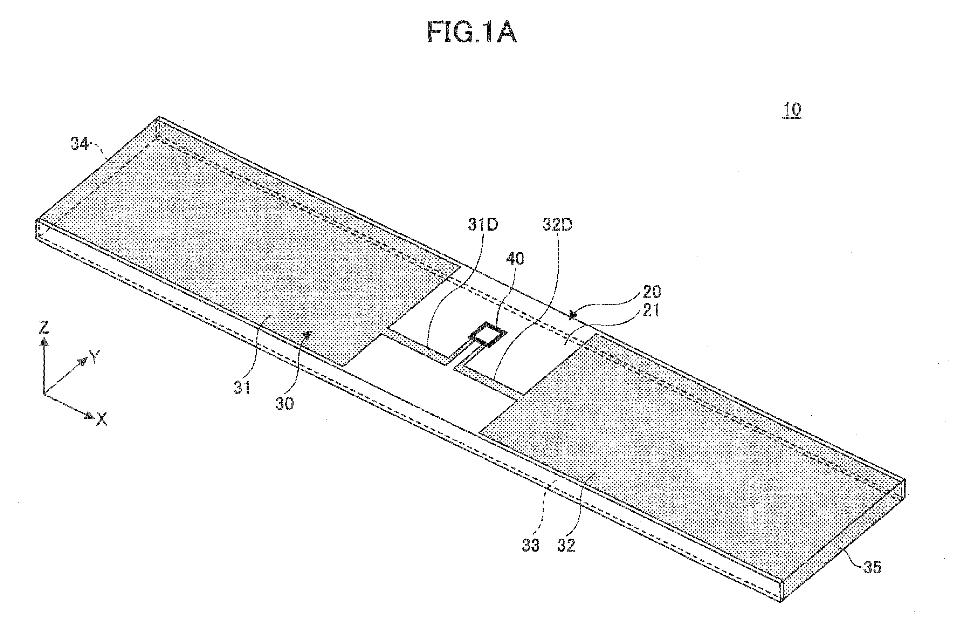

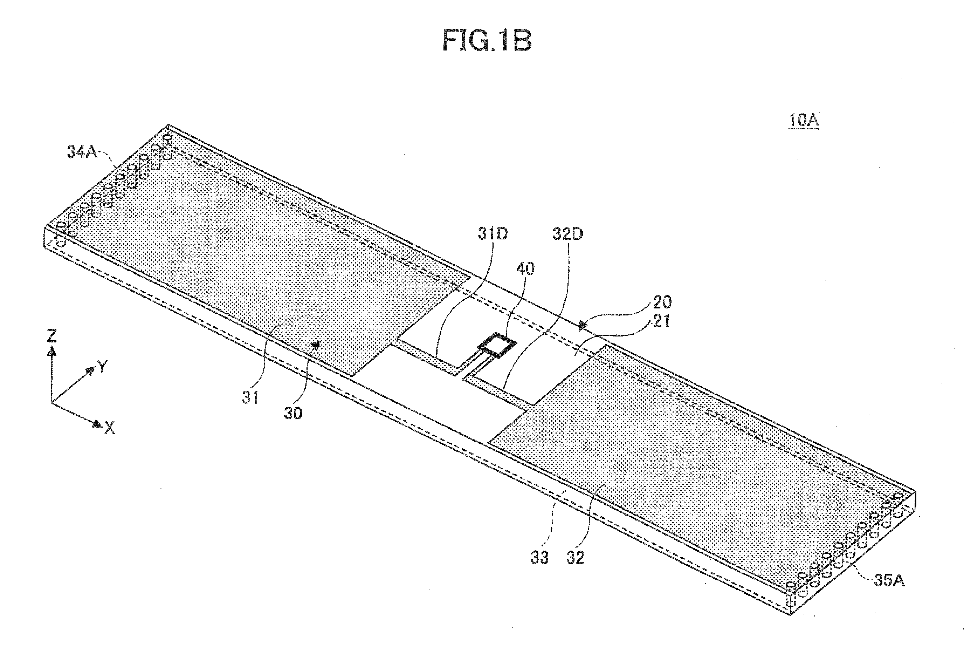

FIG. 1A and FIG. 1B are perspective diagrams respectively indicating RFID tags 10 and 10A according to comparative example 1. As illustrated, FIG. 1A and FIG. 1B define a XYZ coordinate system (orthogonal coordinate system).

As indicated in FIG. 1A, a RFID tag 10 of comparison example 1 includes a substrate 20, an antenna 30, and an IC (Integrated Circuit) chip 40.

The substrate 20 is to be an insulating substrate, for example, a substrate of the FR-4 (Flame Retardant type 4) specification may be used. As the substrate 20, for example, a substrate on which copper foil is formed on a front side 21 and a back side (opposite side of front side 21), may be used.

The antenna 30 includes antenna elements 31 through 35. The antenna elements 31, 32 are formed on the front side 21 of the substrate 20. Between straight line parts 31 D, 32D of the antenna elements 31 and 32, the IC chip 40 is connected. For example, the antenna elements 31, 32 are formed by patterning the copper foil applied on the front side 21 of the substrate 20.

The antenna element 33 is formed on the back side (opposite side of front side 21) of the substrate 20. For example, the antenna element 33 may be formed by using the copper foil applied on the back side of the substrate 20.

The antenna element 34 is formed on the side surface on the X axis negative direction side of the substrate 20. The antenna element 35 is formed on the side surface on the X axis positive direction side of the substrate 20. For example, the antenna elements 34, 35 are fabricated on the side surface of the substrate 20, by forming a copper plating layer by an electroless plating process and an electrolytic plating process.

The antenna elements 31 through 35 form a loop together with the IC chip 40. That is to say, the antenna 30 is a loop-type antenna.

The IC chip 40 is mounted on the front side 21 of the substrate 20 and is electrically connected to the antenna elements 31, 32, and stores data expressing a unique ID in a memory chip inside the IC chip 40. When the IC chip 40 receives signals for reading in the RF (Radio Frequency) band from a reader/writer of the RFID tag 10 via the antenna 30, the IC chip 40 starts operating by the power of the reception signal, and sends out data expressing the ID via the antenna 30. Accordingly, it is possible to read the ID of the RFID tag 10 with the reader/writer.

In the RFID tag 10 of comparative example 1, it is assumed that, for example, an object made of metal is applied to the front side, and therefore the height of the antenna 30 is increased by the substrate 20, and the antenna 30 is made into a loop-type antenna. The RFID tag 10 has an object made of metal applied on the front side, in a state where the antenna element 33 is at the bottom face.

Here, in a different case from the RFID tag 10 of comparative example 1, a very thin RFID tag is formed by mounting a dipole antenna and an IC chip on the front side of a substrate that is a thin sheet, and the RFID tag is applied to an object made of metal. In this case, a sufficient difference in the potential is not achieved between the metal front side and the antenna, and therefore the radiation properties of the antenna are degraded, and the communication distance becomes significantly short.

For this reason, when applying a RFiD tag on the front side of an object made of metal, in order to generate a potential difference between the metal front side and the antenna, and to increase the communication distance, a certain height is needed.

Accordingly, the RFID tag 10 of comparative example 1 has a loop-type antenna 30 formed around the substrate 20 having a certain height.

By making the antenna 30 to be a loop-type antenna, the thickness of the substrate 20 is reduced to approximately 50 mm, for example. By using a loop-type antenna 30, a perpendicular part (antenna elements 34, 35) with respect to the front side of the metal object is formed, and therefore when the RFID tag 10 performs communication, according to a mirror image effect, a mirror image current flows, with respect to the current flowing to the antenna 30.

In the RFID tag 10 of comparison example 1, the radiation properties of the antenna 30 are improved, with the use of this mirror image effect.

Note that instead of the antenna elements 34, 35 of the antenna 30, a plurality of vias 34A, 35A may be provided, as in the RFID tag 10A indicated in FIG. 1B. In the RFID tag 10A of the comparison example 1 indicated in FIG. 1B, as one example, the antenna elements 31, 32 and the antenna element 33 are connected by ten vias 34A and ten vias 35A.

For example, the vias 34A, 35A may be fabricated by forming through holes in the substrate 20 by drill processing or laser processing, and forming a copper plating layer by performing an electroless plating process and an electrolytic plating process on the inner walls of the through holes.

Here, ten of each of the vias 34A, 35A are formed, because many vias 34A, 35A are needed so that the properties of the antenna 30 are substantially the same as those in the case of using antenna elements 34, 35 formed by a copper plating layer. The number of vias 34A, 35A is not limited to ten and there may be more vias; however, the vias need to be formed at least across the entire Y axis direction.

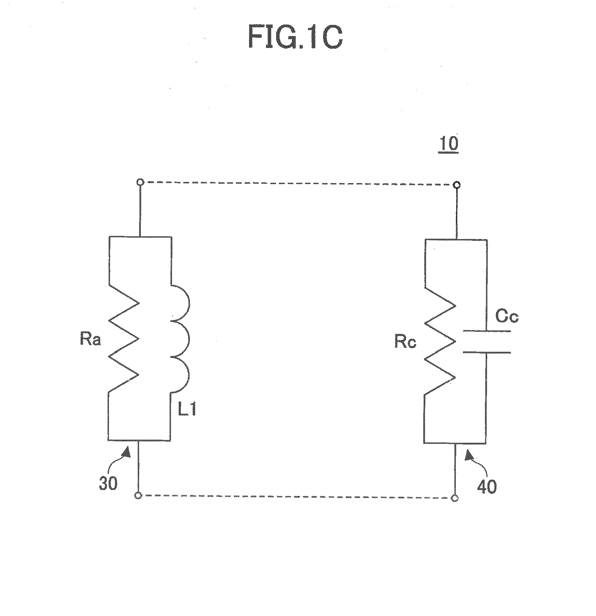

FIG. 1C indicates an equivalent circuit of the RFID tag 10 of comparison example 1.

As illustrated in FIG. 1C, the antenna 30 of the RFID tag 10 may be expressed by a resistor Ra and an inductor L1, and the IC chip 40 of the RFID tag 10 may be expressed by a resistor Rc and a capacitor Cc. That is to say, the antenna 30 includes a resistance component and an inductance component, and the IC chip 40 may be expressed by a resistance component and a capacitance component.

Here, the resistor Ra is a resistor having a resistance value Ra, and the inductor L1 is an inductor having an inductance of L1. Furthermore, the resistor Rc is a resistor having a resistance value Rc, and the capacitor Cc is a capacitor having a capacitance of Cc.

Note that the equivalent circuit of the RFID tag 10A of comparison example 1 (see FIG. 1B) is the same as the equivalent circuit of the RFID tag 10 indicated in FIG. 1C.

<Comparative Example 2>

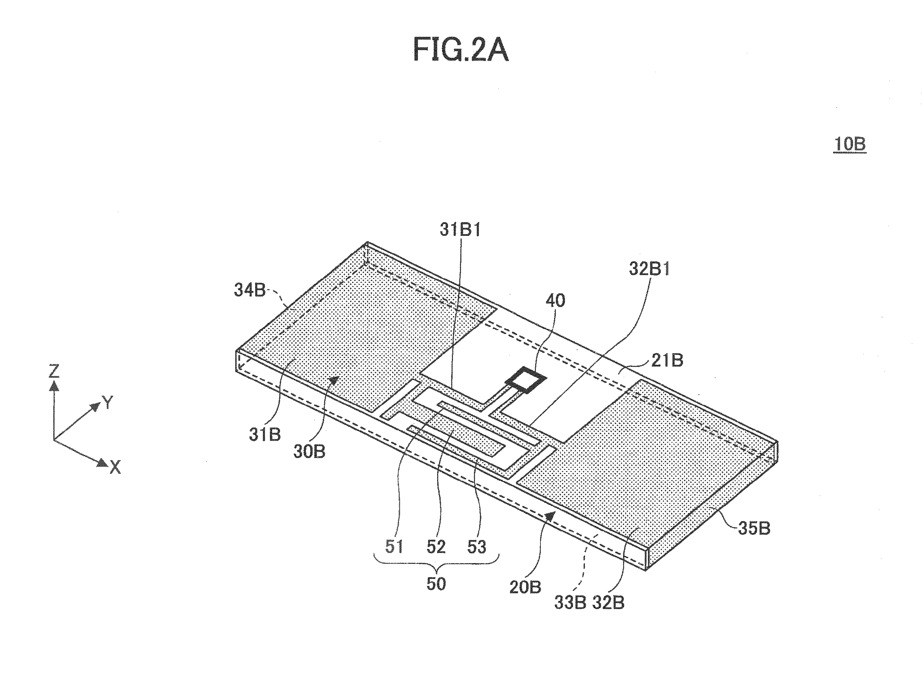

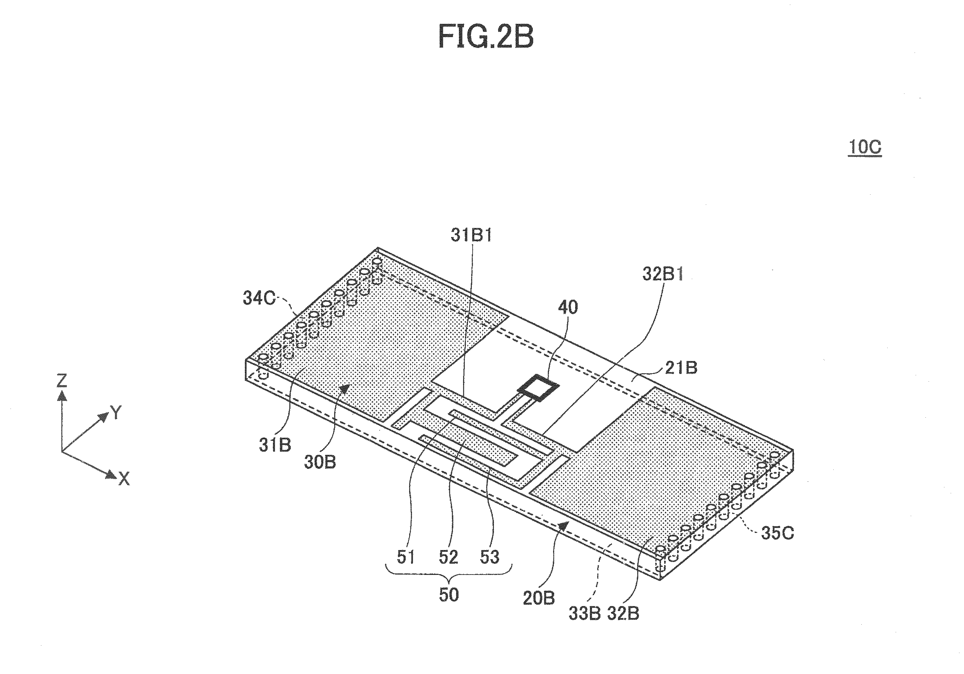

FIG. 2A and FIG. 2B are perspective diagrams respectively indicating RFID tags 10B and 10C according to comparative example 2. In the following, the same constituent elements as those of the RFID tags 10 and 10A of comparative example 1 are denoted by the same reference numerals and descriptions thereof are omitted.

As indicated in FIG. 2A, a RFID tag 10B of comparison example 2 includes a substrate 20B, an antenna 30B, an IC chip 40, and a capacitor 50.

The substrate 20B is the same substrate as the substrate 20 of comparison example 1; however, the length in the X axis direction is shorter than that of the substrate 20.

The antenna 30B includes antenna elements 31 B through 35B. The antenna elements 31 B, 32B are formed on the front side 21 B of the substrate 20B. Between the antenna elements 31 B and 32B, the IC chip 40 is connected. The antenna 30B is a loop-type antenna, similar to the antenna 30 of comparison example 1.

For example, the antenna elements 31 B, 32B are formed by patterning the copper foil applied on the front side 21 B of the substrate 20B. For example, the antenna element 33B may be formed by directly using the copper foil applied on the back side of the substrate 20B. For example, the antenna elements 34B, 35B are formed on the side surface of the substrate 20B, by forming a copper plating layer by an electroless plating process and an electrolytic plating process.

In the RFID tag 10B of comparison example 2, the substrate 20B is shorter in the X axis direction than the substrate 20 of the RFID tag 10A of comparison example 1, and therefore the antenna elements 31B, 32B, 33B of the antenna 30B have a length in the X axis direction less than that of the antenna elements 31, 32, 33 of comparison example 1. Note that the length (width) in the Y axis direction of the antenna elements 31 B, 32B, 33B is the same as the width of the antenna elements 31, 32, 33 of comparison example 1.

Furthermore, the antenna elements 34B, 35B are the same as the antenna elements 34, 35 of comparison example 1.

The IC chip 40 is mounted on the front side 21 B of the substrate 20B and is connected between the antenna elements 31 B and 32B.

The capacitor 50 is formed on the front side 21 B of the substrate 20B, between the antenna elements 31B and 32B. The capacitor 50 includes pattern parts 51, 52, 53, which are arranged parallel to each other. The pattern part 52 extends from an extending part 31B1 of the antenna element 31 B, and the pattern parts 51, 53 extend from an extending part 32B1 of the antenna element 32B.

The pattern parts 51, 52, 53 are arranged in parallel with each other, and thus form two capacitors in a planar view. Furthermore, a capacitor is also formed in a planar view between the pattern parts 51 through 53 and the extending parts 31B1, 32B1.

Note that instead of the antenna elements 34B, 35B, vias 34C, 35C may be included, as in the RFID tag 10C indicated in FIG. 2B. The vias 34C, 35C are the same as the vias 34A, 35A (see FIG. 1 B) of comparison example 1.

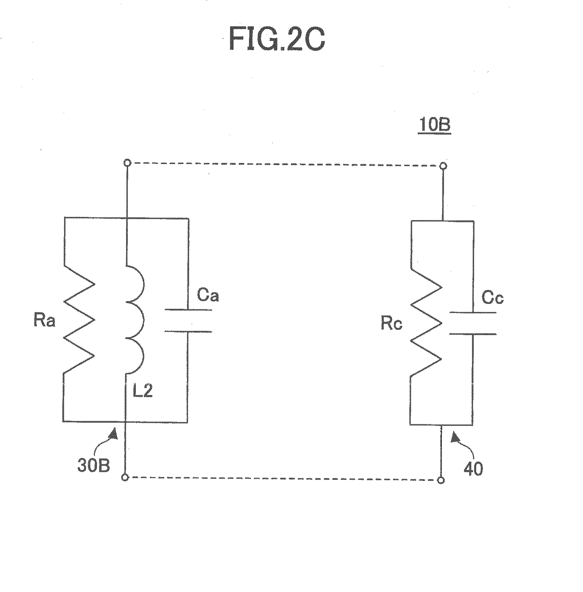

FIG. 2C illustrates an equivalent circuit of the RFID tag 10B of comparison example 2.

As illustrated in FIG. 2C, the antenna 30B of the RFID tag 10B may be expressed by a resistor Ra, an inductor L2, and a capacitor Ca. Furthermore, the IC chip 40 of the RFID tag 10B may be expressed by a resistor Rc and a capacitor Cc. That is to say, in addition to a resistance component and an inductance component, the antenna 30B includes a capacitance component corresponding to the capacitor 50. Here, the capacitor 50 may be handled as the capacitance component of the antenna 30B.

The resistor Ra is a resistor having a resistance value Ra, the inductor L2 is an inductor having an inductance of L2, and the capacitor Ca is a capacitor having a capacitance of Ca. Furthermore, the resistor Rc is a resistor having a resistance value Rc, and the capacitor Cc is a capacitor having a capacitance of Cc.

Note that the length in the Y axis direction (width) of the antenna elements 31 B, 32B, 33B of comparative example 2 is the same as the width of the antenna elements 31, 32, 33 of comparison example 1; however, the length in the X axis direction of the antenna elements 31 B, 32B, 33B is less than that of the antenna elements 31, 32, 33.

Therefore, the inductance component (L2) of the antenna 30B is less than the inductance component (L1) of the antenna 30. This is because when the widths of the conductors are equal, the conductor having a shorter length has less inductance.

Furthermore, the resonance frequency of the RFID tag 10 indicated in FIG. 1A and the resonance frequency f of the RFID tag 10B indicated in FIG. 2A may be obtained by a general formula (1).

Formula (1)

$$f = \frac{1}{2\pi\sqrt{LC}} \quad \cdots (1)$$

In the case of the RFID tag 10, L is the inductance (L1) of the inductor L1 indicated in FIG. 1C, and C is the capacitance of the capacitor Cc.

Furthermore, in the case of the RFID tag 10B, L is the inductance (L2) of the inductor L2 indicated in FIG. 2C, and C is the combined capacitance of the capacitor Ca and the capacitor Cc.

The inductance L2 is less than the inductance L1. Furthermore, the capacitor Ca and the capacitor Cc are connected in parallel, and therefore the combined capacitance of the capacitor Ca and the capacitor Cc is greater than the capacitance of the capacitor Cc.

That is to say, in the RFID tag 10B of comparison example 2, the reduced amount of the inductance, which is caused by including the antenna 30B that is smaller than the antenna 30 of comparison example 1, is compensated for by the capacitance of the capacitor 50. Accordingly, it is possible for the RFID tag 10B of comparison example 2 to achieve the same resonance frequency as that of the RFID tag 10 of comparison example 1.

In other words, as the RFID tag 10B of comparison example 2 includes the capacitor 50, it is possible to reduce the size of the antenna 30B, and consequently, the size of the RFID tag 10B in the Y axis direction is reduced.

For example, when the usable frequency is 953 MHz, the RFID tag 10 of comparison example 1 indicated in FIG. 1A has a length of 65 mm in the X axis direction and a width of 17 mm in the Y axis direction. Meanwhile, the RFID tag 10B of comparison example 2 indicated in FIG. 2A has a length of 45 mm in the X axis direction and a width of 17 mm in the Y axis direction.

As described above, as the RFID tag 10B of comparison example 2 includes the capacitor 50, it is possible to reduce the length in the X axis direction and reduce the size, while maintaining the same usable frequency as the RFID tag 10 of comparison example 1.

Incidentally, in the antennas 30, 30B of the RFID tags 10, 10B of comparison examples 1, 2, the antenna elements 34, 34B, 35, 35B are formed by a plating process, and therefore the manufacturing cost has been high.

Furthermore, in the antennas 30, 30B of the RFID tags 10A, 10C of comparison examples 1, 2, the antenna elements 34A, 34C, 35A, 35C are constructed by vias, and therefore the manufacturing cost has been high.

The manufacturing cost is not sufficiently reduced for these RFID tags 10, 10A, 10B, 10C, and there is room for improvement.

Accordingly, the first and second embodiments described below are for providing an RFID tag by which costs are reduced.

<First Embodiment>

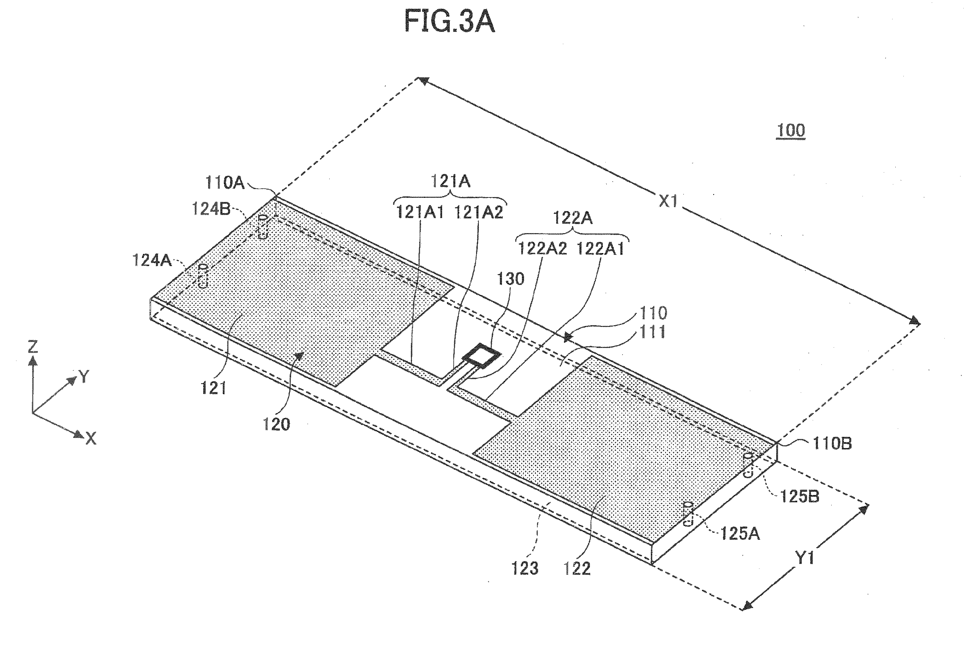

FIG. 3A is a perspective diagram indicating a RFID tag 100 according to a first embodiment. As illustrated, FIG. 3A defines a XYZ coordinate system (orthogonal coordinate system), similar to comparison examples 1, 2.

The RFID tag 100 according to the first embodiment includes a substrate 110, an antenna 120, and an IC (Integrated Circuit) chip 130.

The substrate 110 is to be an insulating substrate, for example, a substrate of the FR-4 (Flame Retardant type 4) specification may be used. As the substrate 110, for example, a substrate on which copper foil is formed on a front side 111 and a back side (opposite side of front side 111), may be used.

As an example of such a substrate 110, it is possible to use a substrate formed by applying copper foil on the front side and the back side of a single insulating layer. An example of an insulating layer, prepreg may be used. Prepreg is an insulating layer formed by, for example, impregnating a woven cloth or a non-woven cloth made of glass fiber or carbon fiber, with insulating resin such as epoxy and polyimide. The insulating resin is preferably thermosetting resin. When prepreg is used as the insulating layer, the copper foil and the insulating layer may be bound by thermal compression to fabricate the substrate 110.

Note that the substrate 110 is not limited to a substrate of the FR-4 specification; for example, the substrate may be of a specification other than FR-4, etc. Furthermore, the substrate 110 may be made of resin such as polycarbonate.

The antenna 120 includes antenna elements 121 through 123, and vias 124A, 124B, 125A, 125B.

The antenna elements 121, 122 are formed on the front side 111 of the substrate 110. The antenna elements 121, 122 are an example of a pair of first antenna elements. The antenna element 121 includes an extending part 121A that extends in the X axis positive direction, and the antenna element 122 includes an extending part 122A that extends in the X axis negative direction. To the extending part 121A of the antenna element 121 and the extending part 122A of the antenna element 122, the IC chip 130 is connected.

The extending parts 121A, 122A respectively include straight line parts 121A1, 122A1 that extend in a straight line in the X axis direction from the antenna elements 121, 122, as well as straight line parts 121A2, 122A2 that bend in the Y axis positive direction from the leading ends of the straight line parts 121A1, 122A1, forming an L shape in a planar view. The straight line parts 121A1, 122A1 are respectively examples of connection parts shaped as a straight line.

However, the straight line parts 121A2, 122A2 are not necessarily needed; only the straight line parts 121A1, 122A1 may be included, forming a straight line shape in a planar view.

For example, the above antenna elements 121, 122 are formed by patterning the copper foil applied on the front side 111 of the substrate 110.

The antenna element 123 is formed on the back side (opposite side of front side 111) of the substrate 110. The antenna element 123 is an example of a second antenna element. For example, the antenna element 123 may be formed by directly using the copper foil applied on the entire back side of the substrate 110.

Note that the material of the antenna elements 121 through 123 is not limited to copper; for example, a metal other than copper such as aluminum may be used.

The vias 124A, 124B are formed on the edge part (near the edge side) on the X axis negative direction side of the substrate 110, and the vias 125A, 125B are formed on the edge part (near the edge side) on the X axis positive direction side of the substrate 110. For example, the vias 124A, 124B, 125A, 125B may be fabricated by forming through holes in the substrate 110 by drill processing or laser processing, and forming a copper plating layer by performing an electroless plating process and an electrolytic plating process on the inner walls of the through holes.

Here, the via 124A and the via 125A have equal positions in the Y axis direction. That is to say, the position where the via 124A is formed in the Y axis direction (width direction of RFID tag 100) between the antenna element 121 and the antenna element 123, is equal to the position where the via 125A is formed in the Y axis direction between the antenna element 122 and the antenna element 123.

The via 124A and the via 125A are arranged, together with the straight line parts 121A1, 122A1, on the same straight line parallel to the X axis. The via 124A and the via 125A are an example of a pair of first connection parts.

Similarly, the via 124B and the via 125B have equal positions in the Y axis direction. That is to say, the position where the via 124B is formed in the Y axis direction (width direction of RFID tag 100) between the antenna element 121 and the antenna element 123, is equal to the position where the via 125B is formed in the Y axis direction between the antenna element 122 and the antenna element 123.

The via 124B and the via 125B are positioned farther in the Y axis positive direction side than the straight line including the straight line parts 121A1, 122A1, in the Y axis direction. The via 124B and the via 125B are an example of a pair of second connection parts. The via 124B and the via 125B are formed at the corner parts of the rectangular substrate 110 in a planar view.

Here, the corner part where the via 124B is formed is the part that is slightly on the inner side than an apex 110A of the X axis negative direction side and the Y axis positive direction side of the substrate 110, and near the apex 110A. Furthermore, the corner part where the via 124B is formed is the part that is slightly on the inner side than an apex 110B of the X axis positive direction side and the Y axis positive direction side of the substrate 110, and near the apex 110B.

It is not possible to respectively form the vias 124B, 125B at the apexes 110A, 110B of the substrate, and are thus formed at the corner parts that are slightly on the inner side than the apexes 110A, 110B.

As described above, the positions of the vias 124B and 125B are shifted in the Y axis positive direction side, with respect to the straight line parts 121A1, 122A1.

Therefore, the length of the loop formed by the antenna elements 121 through 123 and the vias 124B and 125B, is longer than the loop formed by the antenna elements 121 through 123 and the vias 124A and 125A.

Here, the loop formed by the antenna elements 121 through 123 and the vias 124A and 125A is an example of a first loop, and the loop formed by the antenna elements 121 through 123 and the vias 124B and 125B is an example of a second loop. Forming the vias 124B, 125B at the corner parts of the substrate is effective in terms of achieving a long second loop.

Note that the reason for setting the lengths of the first loop and the second loop as described above, is described below.

The antenna 120 including the above-described antenna elements 121 through 123 and vias 124A, 124B, 125A, 125B, is a loop type antenna.

The length of the antenna 120 is to be set in accordance with the frequency used in wireless communication by the RFID tag 100. The active length of the antenna 120 is the length between the point connected to the IC chip 130 of the extending part 121A, and the point connected to the IC chip 130 of the extending part 121B. Here, the active length of the antenna 120 is referred to as the loop length.

The antenna 120 indicated in FIG. 3A is different from a loop antenna formed by combining two so-called dipole antennas; the antenna 120 is a loop antenna that operates with an inductance. Therefore, the loop length of the antenna 120 is set to be shorter than the wavelength $\lambda$ in the usable frequency.

Here, the antenna 120 includes a loop (first loop) formed by the antenna elements 121 through 123 and the vias 124A and 125A, and a loop (second loop) formed by the antenna elements 121 through 123 and the vias 124B and 125B.

Therefore, the loop length of the antenna 120, both the first loop and the second loop, is set to be shorter than the wavelength $\lambda$ in the usable frequency.

The RFID tag 100 according to the first embodiment is different from a so-called loop antenna formed by setting the loop length to be one wavelength; the loop length of the antenna 120 is set to be shorter than the length of one wavelength (A), so that the antenna 120 operates to have an inductance.

In a so-called loop antenna, the loop length and the length of one wavelength ($\lambda$) match, and therefore the current distribution is non-uniform in the length direction of the loop. This is because in a so-called loop antenna, a standing wave is generated, and the current becomes minimum at the end of the dipole antenna, and the current becomes maximum at the center part of the dipole antenna.

Conversely, the distribution of the current density of the antenna 120 operating with an inductance, is substantially uniform overall, in the length direction of the antenna 120. This is because the length of the antenna 120 does not reach the length of one wavelength ($\lambda$), and no standing waves are generated.

As described above, the loop antenna 120 has a different length from that of a so-called loop antenna, and the current distribution is different from that of a so-called loop antenna. As described above, the loop length of the antenna 120 is to be shorter than the wavelength A in the usable frequency.

Furthermore, the loop length of the antenna 120 affects the impedance matching of the loop antenna 120 and the IC chip 130. In order to match the impedance of the loop antenna 120 and the IC chip 130, for example, the resistance component and the capacitor component of the IC chip 130 also affect the impedance matching, other than the loop length of the antenna 120.

For example, when the resistance component of the IC chip 130 is approximately 2000 $\Omega$, and the capacitance is approximately 1.0 pF, for example, the length of the antenna 120 is preferably set to be less than or equal than 1/3 ($\lambda/3$) of the wavelength $\lambda$ in the usable frequency. When the loop length is set in this manner, it is possible to match the impedance of the antenna 120 operating with an inductance, and the resistance component and the capacitor component of the IC chip 130.

Furthermore, when the loop length is set as above, the distribution of the current density of the antenna 120 becomes substantially uniform overall in the length direction of the antenna 120.

This is because the length of the loop antenna 120 operating with an inductance is set to match the impedance of the resistance component and the capacitor component of the antenna 120 and the IC chip 130.

Furthermore, the loop length of the antenna 120 of the RFID tag 100 according to the first embodiment is determined by the size of the substrate 110 holding the antenna 120, and the dielectric constant of the substrate 110.

In Japan, for example, the frequency band of 952 MHz through 954 MHz or 2.45 GHz is assigned for the RFID tag, and therefore the loop length of the antenna 120 is to be set according to the usable frequency. Furthermore, in the US, 915 MHz is assigned as the representative frequency, and in EU, 868 MHz is assigned as the representative frequency, and therefore, the loop length of the antenna 120 is to be set according to these frequencies.

The resonance frequency of the RFID tag 100 according to the first embodiment is assumed to be 953 MHz.

The IC chip 130 is mounted on the front side 111 of the substrate 110 and is electrically connected to the antenna elements 121, 122, and stores data expressing a unique ID in a memory chip inside the IC chip 130. When the IC chip 130 receives signals for reading in the RF (Radio Frequency) band from a reader/writer of the RFID tag 100 via the antenna 120, the IC chip 130 starts operating by the power of the reception signal, and sends out data expressing the ID via the antenna 120. Accordingly, it is possible to read the ID of the RFID tag 100 with the reader/writer.

Next, a description is given of an equivalent circuit of the RFID tag 100 according to the first embodiment described above.

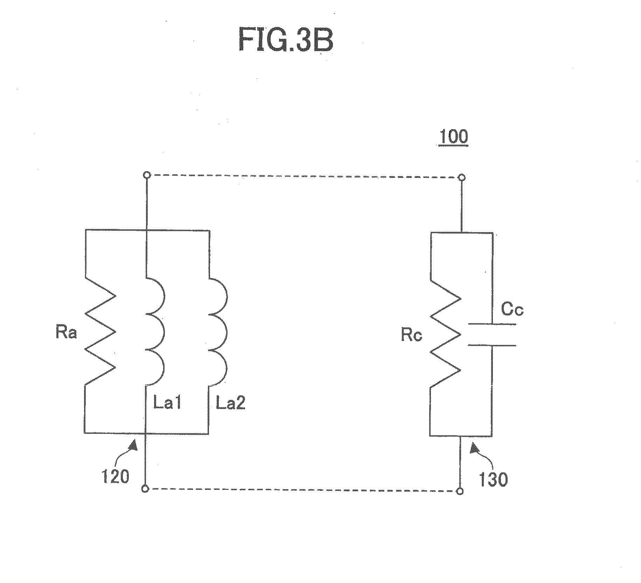

FIG. 3B indicates an equivalent circuit of the RFID tag 100 according to the first embodiment.

As illustrated in FIG. 3B, the antenna 120 of the RFID tag 100 may be expressed by a resistor Ra and inductors La1, La2, and the IC chip 130 of the RFID tag 100 may be expressed by a resistor Rc and a capacitor Cc.

Here, the resistor Ra is a resistor having a resistance value Ra, and the inductor La1 is an inductor having an inductance of La1, and the inductor La2 is an inductor having an inductance of La2. Furthermore, the inductance La1 is handled as the inductance of the first loop of the antenna 120, and the inductance La2 is handled as the inductance of the second loop of the antenna 120. Note that the resistor Rc is a resistor having a resistance value Rc, and the capacitor Cc is a capacitor having a capacitance of Cc.

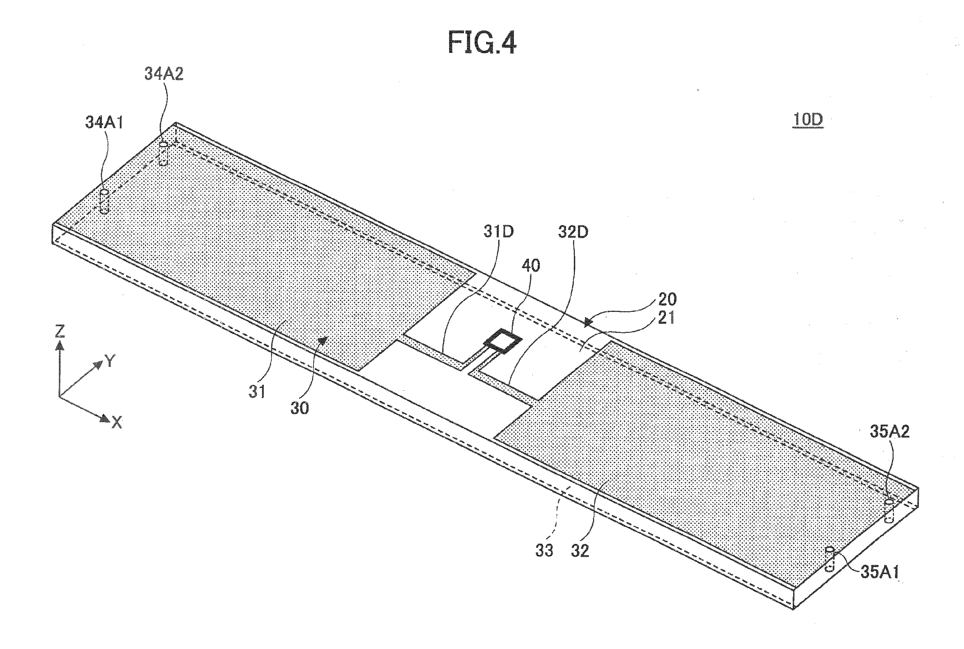

Here, with reference to FIG. 4, a description is given of the size of the RFID tag 100 according to the first embodiment, by comparing a RFID tag 10D in which the number of vias 34A, 35A of the RFID tag 10A (see FIG. 1 B) of comparison example 1 is reduced to two vias, and the RFID tag 100 according to the first embodiment indicated in FIG. 3A.

FIG. 4 is a perspective diagram indicating the RFID tag 10D in which the number of vias 34A, 35A of the RFID tag 10A of comparison example 1 is reduced to two vias each.

The antenna 30 of the RFID tag 10D indicated in FIG. 4 includes vias 34A1, 34A2, 35A1, 35A2. The vias 34A1, 34A2, 35A1, 35A2 are obtained by reducing the number of vias 34A, 35A of the RFID tag 10A of comparison example 1 from 10 to 2 vias. The vias 34A1, 34A2, 35A1, 35A2 respectively have equal positions in the Y axis direction to the positions of the vias 124A, 124B, 125A, 125B of the RFID tag 100 according to the first embodiment.

That is to say, the vias 34A1, 35A1 are formed to be positioned on the same straight line as the straight line parts 31 D, 32D of the antenna elements 31, 32. Furthermore, the vias 34A2, 35A2 are formed in the Y axis positive direction side than the straight line including the straight line parts 31 D, 32D.

Furthermore, here, the loop including the antenna elements 31, 32, 33 and the vias 34A1, 35A1 is the first loop, and the loop including the antenna elements 31, 32, 33 and the vias 34A2, 35A2 is the second loop. The length of the second loop is greater than that of the first loop.

The RFID tag 10D indicated in FIG. 4 has a smaller number of vias than the RFID tag 10A indicated in FIG. 1B, and therefore the inductance of the antenna 30 of the RFID tag 10D is higher than the inductance of the antenna 30 of the RFID tag 10A. This is because the number of vias has been reduced. The inductance becomes higher as the width of the conductor becomes narrow when the length is the same, and becomes higher as the length of the conductor becomes longer when the width is the same.

The inductances of the first loop and the second loop of the antenna 30 of the RFID tag 10D indicated in FIG. 4, are La1A, La2A, respectively. Furthermore, the inductance of the antenna 30 of the RFID tag 10A indicated in FIG. 1B, is L1.

Here, among the inductances La1A, La2A, L1, La2A>La1A>L1 is satisfied. This is because the second loop is longer than the first loop, La2A>La1A is satisfied, and as the number of vias has been reduced, La1A>L1 is satisfied between the antenna 30 of the RFID tag 10D indicated in FIG. 4, and the antenna 30 of the RFID tag 10A indicated in FIG. 1B.

Therefore, as in the RFID tag 10D indicated in FIG. 4, when the number of vias is reduced to a smaller number than that of the RFID tag 10A indicated in FIG. 1B, the inductance of the antenna 30 increases, the resonance frequency expressed by formula (1) decreases, and a resonance is generated at a frequency lower than 953 MHz.

For this reason, in the RFID tag 100 according to the first embodiment indicated in FIG. 3A, in order to achieve the same resonance frequency as that of the RFID tag 10A of comparison example 1 indicated in FIG. 1B, the loop length of the antenna 120 needs to be made shorter, and the inductance of the antenna 120 needs to be made lower than the inductance of the antenna 30 of the RFID tag 10A of comparison example 1.

That is to say, by comparing the RFID tag 10D indicated in FIG. 4 and the RFID tag 100 indicated in FIG. 3A, the length of the RFID tag 100 in the Y axis direction needs to be made shorter than that of the RFID tag 10D.

The RFID tag 10D of comparison example 1 indicated in FIG. 4 has the same size as the RFID tag 10A of comparison example 1 indicated in FIG. 1B, and therefore the length in the X axis direction is 65 mm, and the width Y1 in the Y axis direction is 17 mm.

For this reason, for example, the length X1 in the X axis direction of the RFID tag 100 according to the first embodiment may be 55 mm, and the width in the Y axis direction may be 17 mm.

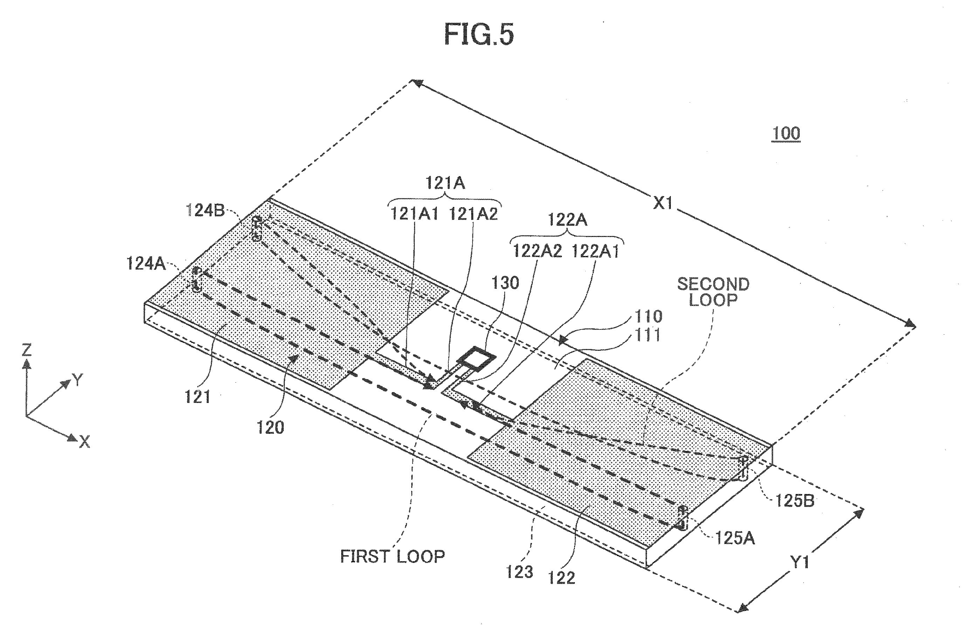

Here, with reference to FIG. 5, the admittance of the antenna 120 of the RFID tag 100 according to the first embodiment is considered.

FIG. 5 is a diagram indicating the first loop and the second loop of the RFID tag 100 according to the first embodiment.

The admittance Yin of the antenna 120 may be expressed by formula (2), using the inductance La1 of the first loop of the antenna 120, the inductance La2 of the second loop of the antenna 120, the resistance value Ra of the antenna 120, and the angular frequency $\omega$ in the usable frequency.

Formula (2)

$$Yin = \frac{1}{Ra} + \frac{1}{j\omega La1} + \frac{1}{j\omega La2} \quad \cdots(2)$$

Here, La2>La1 is satisfied, and therefore it is known from formula (2), that the admittance Yin of the antenna 120 is more significantly affected by the inductance La1 of the first loop, than by the inductance La2 of the second loop.

Furthermore, the resonance frequency of the RFID tag 100 according to the first embodiment is 953 MHz, and the wavelength $\lambda$ at 953 MHz is approximately 300 mm, and the length of the antenna 120 is shorter than one wavelength, and therefore it is considered that the second loop having a long loop length has a higher gain than the first loop. This is because the length of the second loop is closer to one wavelength, than is the length of the first loop.

According to the above, the first loop mainly operates to determine the resonance frequency f of the antenna 120 (that is to say, to match the impedances), and the second loop mainly operates to determine the gain of the antenna 120.

Actually, looking at the antenna 120 overall, the antenna 120 has an inductance according to a combined loop obtained by combining the first loop and the second loop, but it is considered that the first loop and the second loop have different roles according to the above inclinations.

Therefore, the positions of the vias 124A, 124B, 125A, 125B are to be determined such that the resonance frequency is mainly determined by the vias 124A and 125A included in the first loop, and the gain of the antenna 120 is mainly determined by vias 124B, 125B included in the second loop.

As described above, according to the first embodiment, the vias 124A and 125A that are an example of a pair of first vias, and the vias 124B and 125B that are an example of a pair of second vias, are used in constructing the antenna 120, and therefore compared to the RFID tags 10, 10A, 10B, 10C of comparison examples 1, 2, costs are reduced by reducing the number of vias.

In the RFID tags 10 (see FIG. 1A), 10B (see FIG. 2A) of comparison examples 1, 2, antenna elements 34, 35 are formed on the entire side surface in the X axis direction of the substrates 20, 20B, by a plating process.

Compared to the above, in the RFID tag 100 according to the first embodiment, only two pairs of vias 124A, 124B, 125A, 125B are formed, and therefore costs are reduced.

Furthermore, in the RFID tags 10A (see FIG. 1B), 10C (see FIG. 2B) of comparison examples 1, 2, ten vias 34A, 35A, 34C, 35C are formed along the entire side surface in the X axis direction of the substrates 20, 20B.

Compared to the above, in the RFID tag 100 according to the first embodiment, only two pairs of vias 124A, 124B, 125A, 125B are formed, and therefore costs are reduced.

Furthermore, by the RFID tag 100 according to the first embodiment (see FIG. 5), the size of the RFID tag 100 is reduced compared to the RFID tag 10D for comparison indicated in FIG. 4.

As described above, in the RFID tag 100 according to the first embodiment (see FIG. 5), it is possible to make the length X1 in the X axis direction to be 55 mm. This is a value that is less by approximately 20% compared to the length (65 mm) in the X axis direction of the RFID tag 10D for comparison indicated in FIG. 4. That is to say, the size is reduced by approximately 20%, and furthermore, the weight is reduced according to this reduced size.

Furthermore, also by reducing the size of the RFID tag 100 as described above, costs are reduced.

That is to say, in the RFID tag 100 according to the first embodiment, the substrate 110 and the antenna 120 are reduced in size by approximately 20%, and therefore material costs are reduced accordingly, thus reducing the costs.

The RFID tag 100 according to the first embodiment includes a loop type antenna 120. The loop type antenna 120 is included for the purpose of enabling communication, even in the case of applying an object made of metal on the front side of the RFID tag 100.

Generally, by a RFID tag including a loop type antenna, manufacturing costs are increased compared to the case of a very thin RFID tag in which a dipole antenna and an IC chip are mounted on the front side of a substrate that is a thin sheet.

However, according to the first embodiment, it is possible to provide a RFID tag 100 including the loop type antenna 120, by which costs are reduced.

Furthermore, generally, a RFID tag including a loop type antenna is apt to be increased in size and weight, compared to the case of a very thin RFID tag in which a dipole antenna and an IC chip are mounted on the front side of a substrate that is a thin sheet.

However, according to the first embodiment, it is possible to provide a RFID tag 100 including the loop type antenna 120 that is reduced in size and weight.

Furthermore, the RFID tag 100 according to the first embodiment includes vias 124B, 125B that are formed at positions which are offset in the Y axis direction with respect to the straight line parts 121A1, 121A1 of the antenna 120. The vias 124B and 125B form the second loop.

The second loop as described above has substantially the same length as the loop of the antennas 30, 30B of the RFID tags 10, 10A, 10B, 10C of comparison examples 1, 2. This is because the vias 124B and 125B included in the second group are offset in the Y axis direction with respect to the straight line parts 121A1, 121A1.

Therefore, the RFID tag 100 according to the first embodiment may achieve substantially the same gain as the RFID tags 10, 10A, 10B, 10C of comparison examples 1, 2.

For this reason, even if an object made of metal is applied on the front side, the RFID tag 100 according to the first embodiment has substantially the same communication distance as that of the RFID tags 10, 10A, 10B, 10C of comparison examples 1, 2.

Furthermore, in the RFID tag 100 according to the first embodiment, the via 124A and 125A are arranged, together with the straight line parts 121A1, 122A1, on the same straight line parallel to the X axis.

As described above, when the via 124A and 125A are arranged, together with the straight line parts 121A1, 122A1, on the same straight line parallel to the X axis, the Q value of the antenna 120 is decreased and the band of the antenna 120 is increased. Note that the Q value may be expressed by $Q=\omega L/R$, where $\omega$ is the angular frequency in the usable frequency, L is the inductance of the antenna 120, and R is the resistance value of the antenna 120.

As described above, the RFID tag 100 according to the first embodiment, two pairs of vias 124A, 124B, 125A, 125B are used to form two loops (first loop and second loop) in the antenna 120, and therefore costs are reduced. Furthermore, costs are also reduced by reducing the size. In a conventional RFID tag, costs have not been sufficiently reduced like this.

Accordingly, according to the first embodiment, it is possible to provide a RFID tag 100 by which costs are sufficiently reduced. The RFID tag 100 according to the first embodiment is capable of performing communication even if an object made of metal is applied on the front side.

Note that in the above, a description is given of a configuration in which the vias 124A and 125A are arranged, together with the straight line parts 121A1, 122A1, on the same straight line parallel to the X axis, and the vias 124B and 125B are positioned farther in the Y axis positive direction side, than the straight line including the straight line parts 121A1, 122A1 in the Y axis direction. Accordingly, the second group including the vias 124B and 125B is longer than the first group including the vias 124A and 125A.

However, if the second group including the vias 124B and 125B is longer than the first group including the vias 124A and 125A, the vias 124A and 125A need not be arranged, together with the straight line parts 121A1, 122A1, on the same straight line parallel to the X axis.

That is to say, if the second group including the vias 124B and 125B is longer than the first group including the vias 124A and 125A, the vias 124A and 125A may be formed at positions shifted in the Y axis direction, without being positioned on the straight line including the straight line parts 121A1, 122A1.

<Second Embodiment>

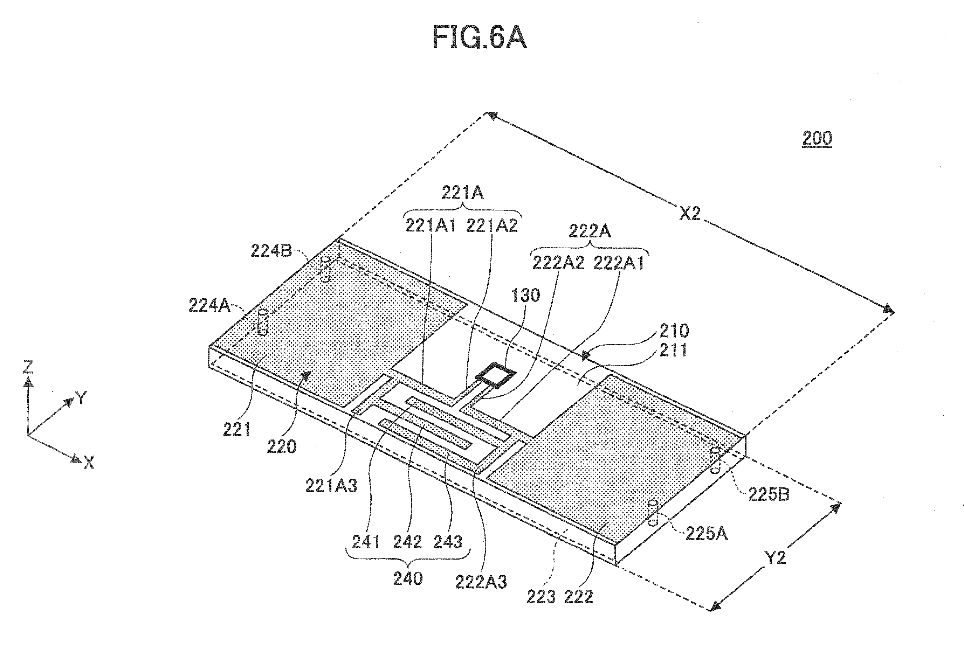

FIG. 6A is a perspective diagram indicating a RFID tag 200 according to a second embodiment. As illustrated, FIG. 6A defines a XYZ coordinate system (orthogonal coordinate system), similar to the first embodiment. Furthermore, in the following, the same constituent elements as those of the RFID tag 100 according to the first embodiment are denoted by the same reference numerals, and descriptions thereof are omitted.

The RFID tag 200 according to the second embodiment includes a substrate 210, an antenna 220, an IC chip 130, and a capacitor 240.

The RFID tag 200 according to the second embodiment includes the capacitor 240, and therefore the length X2 in the X axis direction is less than the length X1 (see FIG. 3A) of the RFID tag 100 according to the first embodiment.

The length X2 is, for example, 45 mm. That is to say, the length X2 is the same as that of the RFID tag 10B (see FIG. 2A) of comparison example 2.

Note that the length Y2 in the Y axis direction of the RFID tag 200 according to the second embodiment, is the same (17 mm) as the length Y1 (see FIG. 3A) in the Y axis direction of the RFID tag 100 according to the first embodiment.

Similar to the substrate 110 according to the first embodiment, the substrate 210 is to be an insulating substrate; for example, a substrate of the FR-4 specification may be used. As the substrate 210, for example, a substrate on which copper foil is formed on a front side 211 and a back side (opposite side of front side 211), may be used.

The RFID tag 200 according to the second embodiment has a shorter length in the X axis direction than the RFID tag 100 according to the first embodiment, and therefore the length in the X axis direction of the substrate 210 is less than the length in the X axis direction of the substrate 110 according to the first embodiment.

The antenna 120 includes antenna elements 221 through 223, and vias 224A, 224B, 225A, 225B.

The antenna elements 221, 222 are formed on the front side 211 of the substrate 210. The antenna elements 221, 222 are an example of a pair of first antenna elements. The antenna element 221 includes an extending part 221A that extends in the X axis positive direction, and the antenna element 222 includes an extending part 222A that extends in the X axis negative direction. To the extending part 221A of the antenna element 221 and the extending part 222A of the antenna element 222, the IC chip 130 is connected.

The extending parts 221A, 222A respectively include straight line parts 221A1, 222A1 that extend in a straight line in the X axis direction from the antenna elements 221, 222, as well as straight line parts 221A2, 222A2 that bend in the Y axis direction from the leading ends of the straight line parts 221A1, 222A1, forming an L shape in a planar view. The straight line parts 221A1, 222A1 are respectively examples of connection parts shaped as straight lines.

The antenna element 223 is formed on the back side (opposite side of front side 211) of the substrate 210. The antenna element 223 is an example of a second antenna element.

Note that the length in the X axis direction of the RFID tag 200 according to the second embodiment, is less than that of the RFID tag 100 according to the first embodiment, and therefore the lengths in the X axis direction of the antenna elements 221, 222, 223 are respectively less than the lengths in the X axis direction of the antenna elements 121, 122, 123 of the first embodiment.

The vias 224A, 224B are formed on the edge part (near the edge side) on the X axis negative direction side of the substrate 210, and the vias 225A, 225B are formed on the edge part (near the edge side) on the X axis positive direction side of the substrate 210.

Here, the via 224A and the via 225A have equal positions in the Y axis direction. That is to say, the position where the via 224A is formed in the Y axis direction (width direction of RFID tag 200) between the antenna element 221 and the antenna element 223, is equal to the position where the via 225A is formed in the Y axis direction between the antenna element 222 and the antenna element 223.

The via 224A and the via 225A are arranged, together with the straight line parts 221A1, 222A1, on the same straight line parallel to the X axis. The via 224A and the via 225A are an example of a pair of first connection parts.

Similarly, the via 224B and the via 225B have equal positions in the Y axis direction. That is to say, the position where the via 224B is formed in the Y axis direction (width direction of RFID tag 200) between the antenna element 221 and the antenna element 223, is equal to the position where the via 225B is formed in the Y axis direction between the antenna element 222 and the antenna element 223.

The via 224B and the via 225B are positioned farther in the Y axis positive direction side than the straight line including the straight line parts 221A, 222A1, in the Y axis direction. The via 224B and the via 225B are an example of a pair of second connection parts.

As described above, the positions of the vias 224B and 225B are shifted in the Y axis positive direction side, with respect to the straight line parts 221A1, 222A1.

Therefore, the length of the second loop formed by the antenna elements 221 through 223 and the vias 224B and 225B, is longer than the first loop formed by the antenna elements 221 through 223 and the vias 224A and 225A.

The antenna 220 including the above-described antenna elements 221 through 223 and vias 224A, 224B, 225A, 225B, is a loop type antenna.

The length of the antenna 220 is to be set in accordance with the frequency used in wireless communication by the RFID tag 200. The active length of the antenna 220 is the length between the point connected to the IC chip 130 of the extending part 221A, and the point connected to the IC chip 130 of the extending part 221 B.

The resonance frequency of the RFID tag 200 according to the second embodiment is assumed to be 953 MHz.

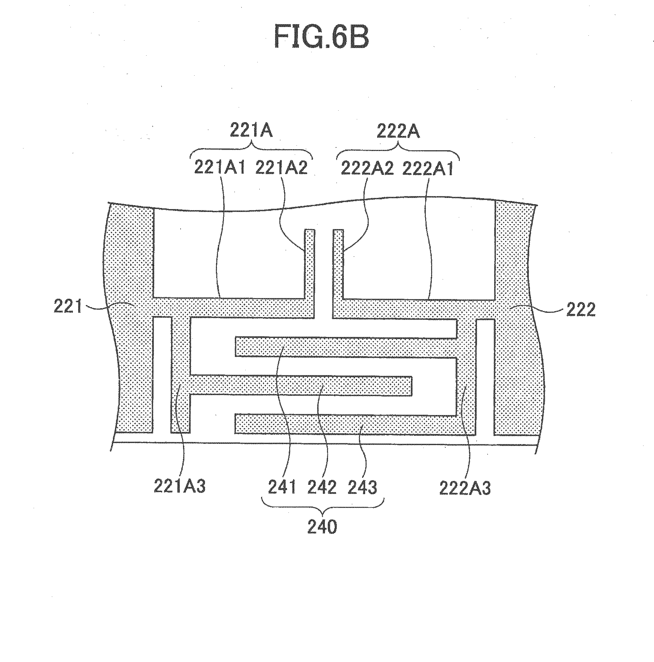

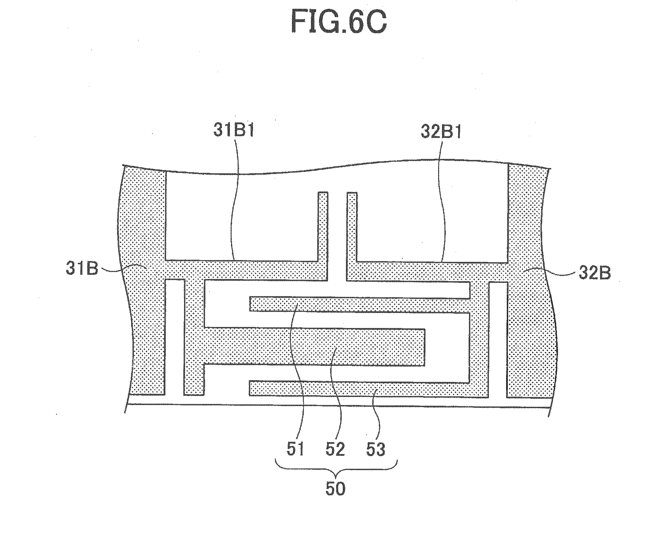

Next, a description is given of the capacitor 240. Here, in addition to FIG. 6A, the enlarged views of FIG. 6B and FIG. 6C are used appropriately. FIG. 6B is an enlarged view indicating the capacitor 240 of the RFID tag 200 according to the second embodiment, and FIG. 6C is an enlarged view indicating the capacitor 50 of the RFID tag 10B according to comparison example 2. Note that in FIG. 6B and FIG. 6C, the IC chip 130 is omitted.

The capacitor 240 is formed on the front side 211 of the substrate 210, between the antenna elements 221 and 222. The capacitor 240 includes pattern parts 241, 242, 243, which are arranged parallel to each other. The pattern part 242 extends from a branching part 221A3 branching from the straight line part 221A1 of the antenna element 221, and the pattern parts 241, 243 extend from a branching part 222A3 branching from the straight line part 222A1 of the antenna element 222.

The pattern parts 241, 242, 243 are arranged in parallel with each other, and thus form two capacitors in a planar view. Furthermore, a capacitor is also formed in a planar view between the pattern parts 241 through 243 and the straight line parts 221A1, 222A1.

For example, this capacitor 240 is formed at the same time as the antenna 220, by patterning the copper foil applied on the front side 211 of the substrate 210.

Furthermore, compared to the capacitor 50 of comparison example 2 (see FIG. 2A and FIG. 6C), in the capacitor 240 according to the second embodiment, the width in the Y axis direction of the pattern parts 241, 242, 243 is less than the width in the Y axis direction of the pattern parts 51, 52, 53 of the capacitor 50. Note that the pattern parts 241, 242, 243 and the pattern parts 241, 242, 243 have the same length in the X axis direction.

In other words, the intervals in the Y axis direction of the pattern parts 241, 242, 243 are wider than the intervals in the Y axis direction of the pattern parts 51, 52, 53.

That is to say, the capacitance of the capacitor 240 according to the second embodiment is less than the capacitance of the capacitor 50 of comparison example 2. This is because the distance between the electrodes of the capacitor 240 is longer than the distance between the electrodes of the capacitor 50 of comparison example 2.

The antenna 220 of the RFID tag 200 according to the second embodiment forms two pairs of vias 224A, 224B, 225A, 225B, and therefore, similar to the RFID tag 100 according to the first embodiment, the antenna 220 of the RFID tag 200 according to the second embodiment has a higher inductance than the antenna 20B of the RFID tag 10B (see FIG. 2A) of comparison example 2.

In order to maintain the same resonance frequency as the RFID tag 10B (see FIG. 2A) of comparison example 2, by using the antenna 220 having a high inductance described above, there is a need to cancel out the increased amount of the inductance of the antenna 220 caused by forming the vias 224A, 224B, 225A, 225B, by reducing the capacitance of the capacitor 240.

As described above, the RFID tag 200 according to the second embodiment maintains the same resonance frequency as the RFID tag 10B (see FIG. 2A) of comparison example 2, while maintaining the same length in the X axis direction as the RFID tag 10B (see FIG. 2A) of comparison example 2.

The IC chip 130 is mounted on the front side 211 of the substrate 210 and is electrically connected to the antenna elements 221, 222, and stores data expressing a unique ID in a memory chip inside the IC chip 130. When the IC chip 130 receives signals for reading in the RF (Radio Frequency) band from a reader/writer of the RFID tag 200 via the antenna 220, the IC chip 130 starts operating by the power of the reception signal, and sends out data expressing the ID via the antenna 220. Accordingly, it is possible to read the ID of the RFID tag 200 with the reader/writer.

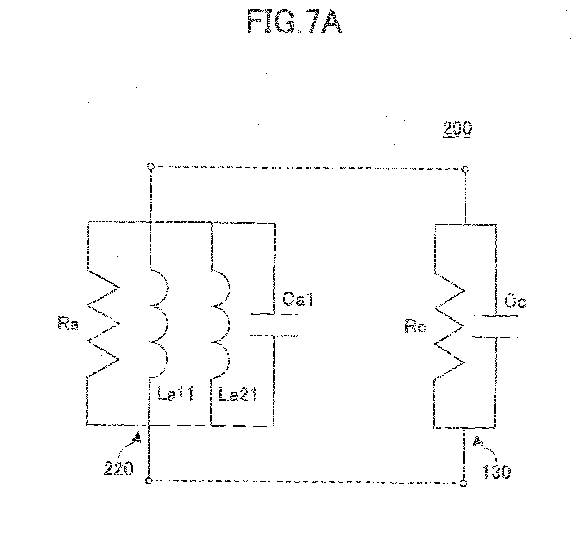

Next, a description is given of an equivalent circuit of the RFID tag 200 according to the second embodiment described above, with reference to FIG. 7A.

FIG. 7A is a diagram indicating the equivalent circuit of the RFID tag 200 according to the second embodiment.

As illustrated in FIG. 7A, the antenna 220 of the RFID tag 300 may be expressed by a resistor Ra, an inductor La11, an inductor La21, and a capacitor Ca1. The IC chip 130 of the RFID tag 200 may be expressed by a resistor Rc and a capacitor Cc. The inductor La11 and the inductor La21 respectively express inductance components of the first loop and the second loop.

That is to say, in addition to a resistance component and an inductance component, the antenna 220 includes a capacitance component corresponding to the capacitor 240. Here, the capacitor 240 may be handled as the capacitance component of the antenna 220.

The resistor Ra is a resistor having a resistance value Ra and the inductor La11 is an inductor having an inductance of La11. The inductor La21 is an inductor having an inductance of La21, and the capacitor Ca1 is a capacitor having a capacitance of Ca1. Note that La21>La11 is satisfied.

Furthermore, the resistor Rc is a resistor having a resistance value Rc, and the capacitor Cc is a capacitor having a capacitance of Cc.

The capacitance of the capacitor Ca1 is lower than that of the capacitor Ca of comparison example 2. That is to say, Ca<Ca1 is satisfied.

The inductance (combined inductance of La11 and La21) of the antenna 220 of the RFID tag 200 according to the second embodiment, is higher than the inductance L2 (see FIG. 2C) of the antenna 20B of comparison example 2. This is because the antenna elements 221, 222, 223 are connected by two pairs of vias 224A, 224B, 225A, 225B.

In order to cancel out the increase in the inductance of the antenna 220, and achieve the same resonance frequency as the comparison example 2, in the second embodiment, the capacitance of the capacitor 240 is set to be smaller than that of the capacitor 50 of comparison example 2, for the purpose of making the capacitance of the capacitor Ca1 lower than the capacitor Ca of comparison example 2.

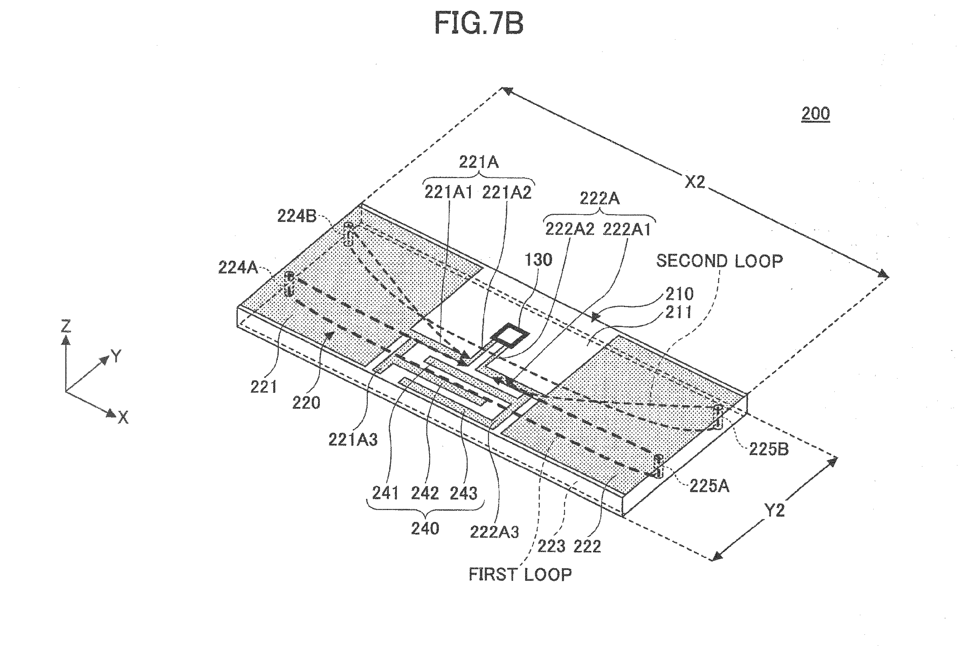

FIG. 7B is a diagram indicating the first loop and the second loop of the RFID tag 200 according to the second embodiment.

Similar to the first embodiment, the admittance of the antenna 220 is more significantly affected by the inductance La11 of the first loop, than by the inductance La21 of the second loop.

Furthermore, the resonance frequency of the RFID tag 200 according to the second embodiment is 953 MHz, the wavelength A at 953 MHz is approximately 300 mm, and the length of the antenna 220 is less than one wavelength; therefore it is considered that the second loop having a long loop length has a higher gain than the first loop. This is because the length of the second loop is closer to one wavelength, than is the length of the first loop.

According to the above, the first loop mainly operates to determine the resonance frequency f of the antenna 220 (that is to say, to match the impedances), and the second loop mainly operates to determine the gain of the antenna 220.

Actually, looking at the antenna 220 overall, the antenna 220 has an inductance according to a combined loop obtained by combining the first loop and the second loop, but it is considered that the first loop and the second loop have different roles according to the above inclinations.

Therefore, the positions of the vias 224A, 224B, 225A, 225B are to be determined such that the resonance frequency is mainly determined by the vias 224A and 225A included in the first loop, and the gain of the antenna 220 is mainly determined by vias 224B, 225B included in the second loop.

Furthermore, in the RFID tag 200 according to the second embodiment, the increase in the inductance of the antenna 220, which is caused by forming the vias 224A, 224B, 225A, 225B, is adjusted by the capacitance of the capacitor 240.

In the capacitor 240 according to the second embodiment, costs are reduced in the procedure of the etching process, by providing a high manufacture tolerance in the pattern parts 241 through 243, compared to the capacitor 50 of comparison example 2.

As described above, according to the second embodiment, the RFID tag 200 is provided, in which the inductance of the antenna 220 is increased by forming the vias 224A, 224B, 225A, 225B, and a high manufacture tolerance is provided in the capacitor 240, thereby reducing costs.

<Third Embodiment>

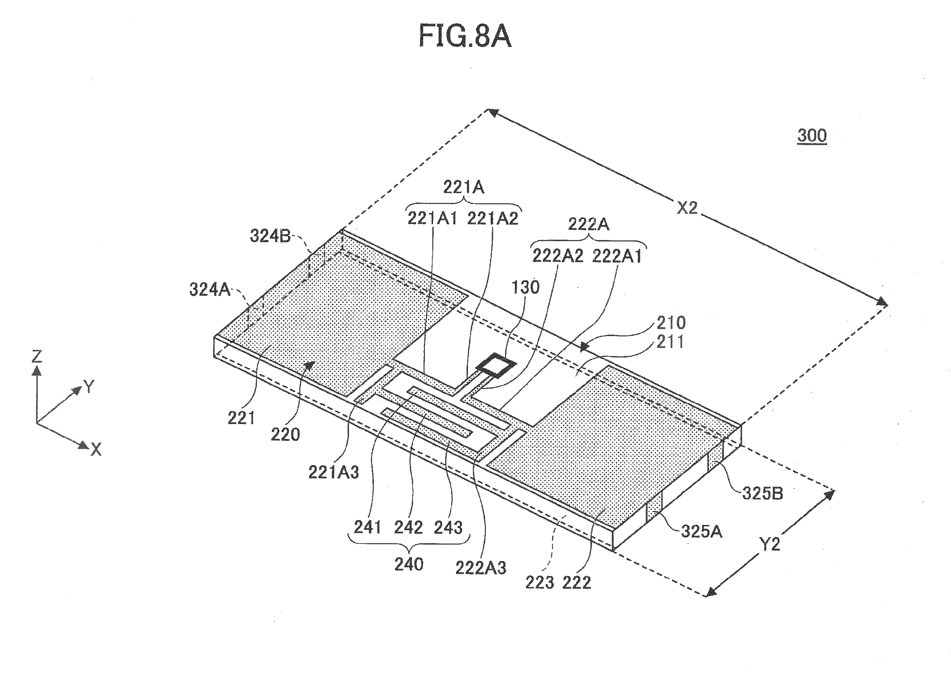

FIG. 8A is a perspective diagram indicating a RFID tag 300 according to a third embodiment. The third embodiment is a modification of the second embodiment. In FIG. 8A, the same constituent elements as those of the RFID tag 200 (see FIG. 6A) according to the second embodiment are denoted by the same reference numerals, and descriptions thereof are omitted.

In the RFID tag 300 according to the third embodiment, connection parts 324A, 324B, 325A, 325B are formed by a plating process on the side surface in the X axis direction of the substrate 210, instead of the vias 224A, 224B, 225A, 225B of the RFID tag 200 according to the second embodiment.

Also in the case of forming the connection parts 324A, 324B, 325A, 325B instead of the vias 224A, 224B, 225A, 225B, the inductance of the antenna 220 is increased compared to comparison example 2, and therefore the capacitor 240 provided with high manufacture tolerance is used to match the resonance frequency.

In the connection parts 324A, 324B, 325A, 325B of the RFID tag 300 according to the third embodiment, the area where a plating process is performed is small compared to the antenna elements 34B, 35B of the RFID tag 10B of comparison example 2, and therefore costs are reduced.

<Fourth Embodiment>

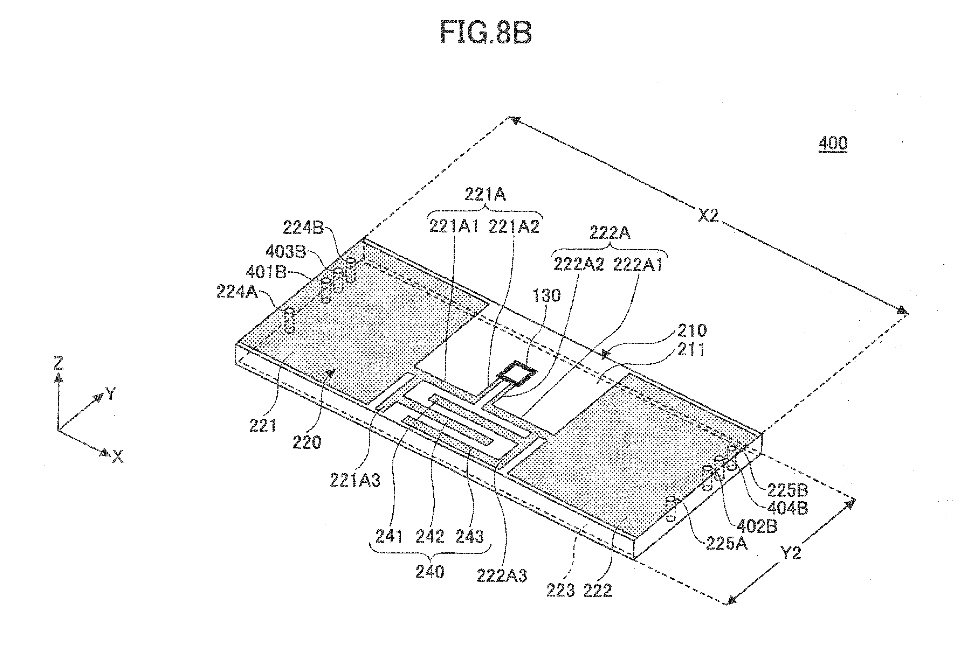

FIG. 8B is a perspective diagram indicating a RFID tag 400 according to a fourth embodiment. The fourth embodiment is a modification of the second embodiment. In FIG. 8B, the same constituent elements as those of the RFID tag 200 (see FIG. 6A) according to the second embodiment are denoted by the same reference numerals, and descriptions thereof are omitted.

In the RFID tag 400 according to the fourth embodiment, vias 401 B and 403B, and vias 402B and 404B are respectively formed, in the Y axis positive direction side of the via 224B and the via 225B of the RFID tag 200 according to the second embodiment.

The vias 401 B, 402B, 403B, 404B, together with the vias 224B, 225B, are examples of second connection parts. That is to say, in the fourth embodiment, a plurality of pairs of second connection parts are included. The vias 224B, 225B, 401B, 402B, 403B, 404B, which are a plurality of pairs of second connection parts, are arranged in the short-side direction (Y axis direction) of the substrate 210.

The vias 401B and 403B, and vias 402B and 404B are respectively formed near the vias 224B, 225B, and may thus be considered to form a second loop together with the vias 224B, 225B.

The second loop is mainly a loop for determining the gain of the RFID tag 400, and therefore by increasing the number of vias compared to the second embodiment, it is possible to increase the gain of the antenna 220.

Note that even if the number of vias is increased, the number of vias is significantly smaller than that of the RFID tag 10C of comparison example 2, and therefore costs are reduced.

<Fifth Embodiment>

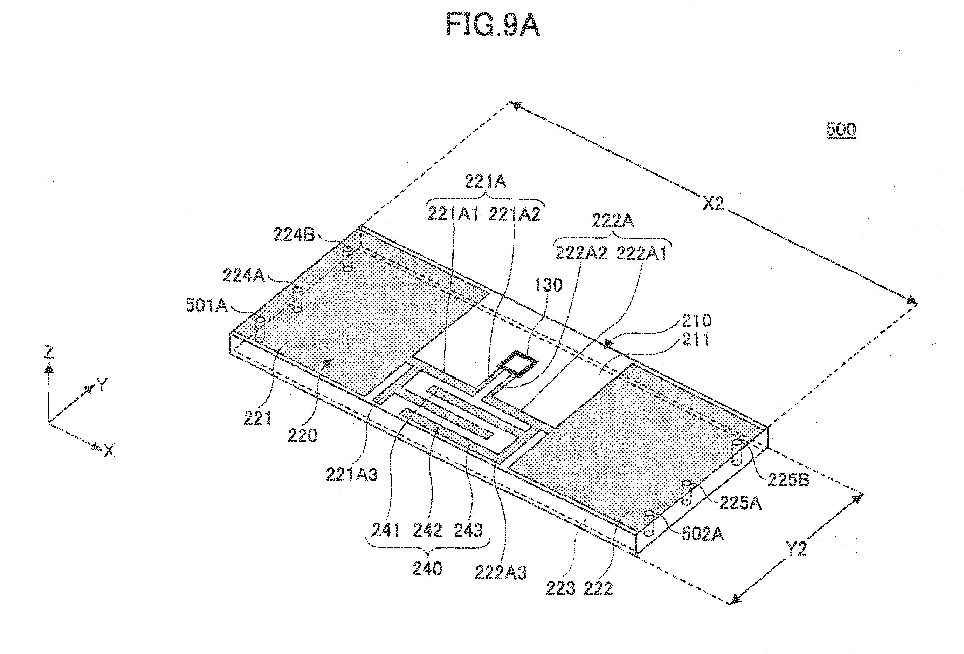

FIG. 9A is a perspective diagram indicating a RFID tag 500 according to a fifth embodiment. The fifth embodiment is a modification of the second embodiment. In FIG. 9A, the same constituent elements as those of the RFID tag 200 (see FIG. 6A) according to the second embodiment are denoted by the same reference numerals, and descriptions thereof are omitted.

In the RFID tag 500 according to the fifth embodiment, a via 501A and a via 502A are respectively formed, in the Y axis negative direction side of the via 224A and the via 224B of the RFID tag 200 according to the second embodiment.

The vias 501A, 502A form a third loop, which is different from the first loop or the second loop.

The position of the third loop in the Y axis direction is shifted from the straight line parts 221A1, 222A1, and therefore, the third loop contributes to the increase in the gain of the antenna 220, similar to the second loop.

As described above, the vias 501A, 502A may be added to the vias 224A, 224B, 225A, 225B.

Note that even if the number of vias is slightly increased, the number of vias is significantly smaller than that of the RFiD tag 10C of comparison example 2, and therefore costs are reduced.

<Sixth Embodiment>

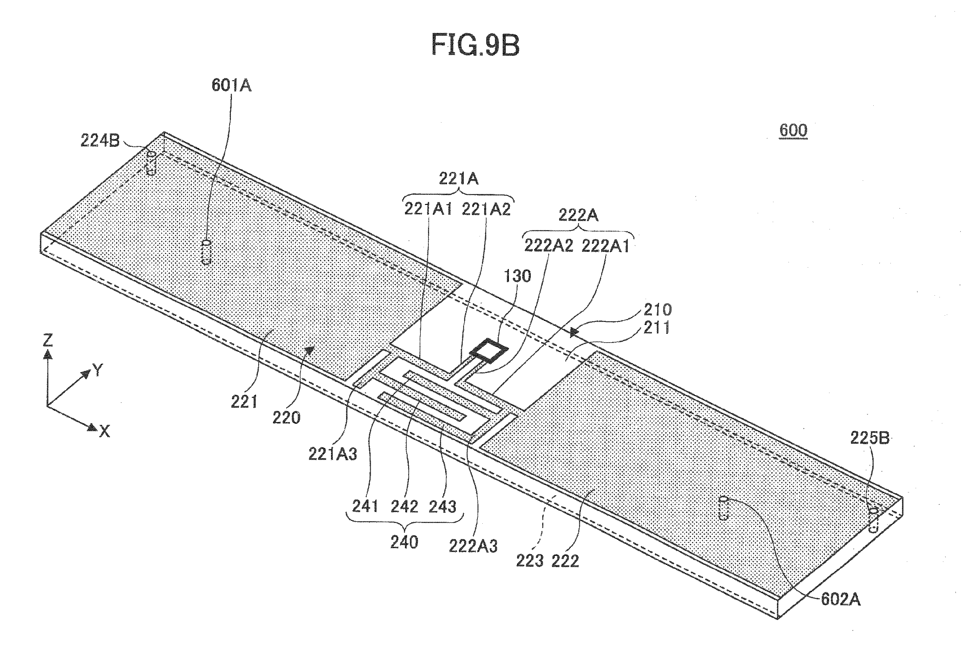

FIG. 9B is a perspective diagram indicating a RFID tag 600 according to a sixth embodiment. The sixth embodiment is a modification of the second embodiment. In FIG. 9B, the same constituent elements as those of the RFID tag 200 (see FIG. 6A) according to the second embodiment are denoted by the same reference numerals, and descriptions thereof are omitted.

The RFID tag 600 according to the sixth embodiment is obtained by enlarging the RFID tag 200 according to the second embodiment.

The positions of vias 601 A, 602A are respectively the same as the vias 224A, 225A according to the second embodiment.

That is to say, the RFID tag 600 according to the sixth embodiment has a configuration in which constituent elements other than the vias 224A, 225A are enlarged, without changing the positions of the vias 224A, 225A of the RFID tag 200 according to the second embodiment. The vias 601A, 602A correspond to the vias 224A, 225A according to the second embodiment.

In the RFID tag 600 described above, the distance between the vias 224B, 225B is long, and therefore the gain according to the second loop is increased.

The RFID tag 600 according to the sixth embodiment is appropriate for purposes where there is no problem in enlarging the overall size.

Note that the number of vias is the same as the second embodiment, and the number of vias is significantly smaller than that of the RFID tag 10C of comparison example 2, and therefore costs are reduced.

DESCRIPTION OF THE REFERENCE NUMBERS

**[0223]**

| | |
|---|---|
| 100 | RFID tag |
| 110 | substrate |
| 120 | antenna |
| 121, 122, 123 | antenna element |
| 124A, 124B, 125A, 125B | via |
| 130 | IC chip |
| 200 | RFID tag |
| 210 | substrate |
| 220 | antenna |
| 240 | capacitor |
| 221, 222, 223 | antenna element |
| 224A, 224B, 225A, 225B | via |
| 241, 242, 243 | pattern part |

| | |
|---|---|
| 300 | RFID tag |
| 324A, 324B, 325A, 325B | connection part |
| 400 | RFID tag |
| 401 B, 402B, 403B, 404B | via |
| 500 | RFID tag |
| 501A, 502A | via |
| 600 | RFID tag |
| 601 A, 602A | via |

**Claims**

1. An RFID tag comprising:

   a substrate ;
   a pair of first antenna elements formed on one side of the substrate ;
   an IC chip connected between the pair of first antenna elements ;
   a second antenna element formed on another side of the substrate ;
   a pair of first connection parts formed between the pair of first antenna elements and the second antenna element , the pair of first connection parts forming a first loop with the pair of first antenna elements, the IC chip , and the second antenna element; and
   a pair of second connection parts formed between the pair of first antenna elements and the second antenna element , the pair of second connection parts forming a second loop, which is longer than the first loop, with the pair of first antenna elements , the IC chip , and the second antenna element, wherein
   a length of the first loop and a length of the second loop are respectively shorter than a wavelength in a usable frequency.

2. The RFID tag according to claim 1, wherein
   the pair of first antenna elements respectively include a pair of connection parts shaped as straight lines connected to terminals of the IC chip , and
   the pair of connection parts and the pair of first connection parts are arranged on one straight line.

3. The RFID tag according to claim 1 or 2, wherein
   the substrate is rectangular in a planar view, and
   the pair of second connection parts are respectively formed at corner parts of the substrate in a planar view.

4. The RFID tag according to any one of claims 1 through 3, further comprising:

   a capacitor connected parallel to the pair of first antenna elements.

5. The RFID tag according to claim 4, wherein
   the capacitor is formed by patterning the same conductive layer as that of the pair of first antenna elements.

6. The RFID tag according to any one of claims 1 through 4, wherein
   a plurality of the pairs of second connection parts are included.

7. The RFID tag according to claim 6, wherein
   the substrate is rectangular in a planar view, and the pair of first antenna elements is arranged in a long-side direction of the substrate, on the one side of the substrate, and
   the plurality of the pairs of second connection parts are arranged in a short-side direction of the substrate.

8. The RFID tag according to any one of claims 1 through 7, wherein
   the pair of first connection parts and the pair of second connection parts are vias which are formed in through holes piercing through the substrate in a thickness direction.

9. The RFID tag according to any one of claims 1 through 7, wherein
   the pair of first connection parts and the pair of second connection parts are formed on a side surface of the substrate.

**10.** The RFID tag according to any one of claims 1 through 9, wherein
the length of the first loop and the length of the second loop are respectively set to be less than or equal to one third of a length of the wavelength in the usable frequency.

# FIG.1A

EP 2 833 477 A1

# FIG.1B

EP 2 833 477 A1

# FIG.1C

# FIG.2A

10B

EP 2 833 477 A1

# FIG.2B

EP 2 833 477 A1

FIG.2C

10B

Ra

Ca

L2

30B

Rc

Cc

40

# FIG.3A

EP 2 833 477 A1

# FIG.3B

# FIG.4

EP 2 833 477 A1

FIG.5

# FIG.6A

EP 2 833 477 A1

# FIG.6B

FIG.6C

# FIG.7A

200

Ra    La11   La21   Ca1

220

Rc    Cc

130

EP 2 833 477 A1

# FIG.7B

# FIG.8A

EP 2 833 477 A1

# FIG.8B

FIG.9A

# FIG.9B

EP 2 833 477 A1

## INTERNATIONAL SEARCH REPORT

| | International application No. |
|---|---|
| | PCT/JP2012/058733 |

A.  CLASSIFICATION OF SUBJECT MATTER
*H01Q9/02*(2006.01)i, *G06K19/07*(2006.01)i, *H01Q1/38*(2006.01)i, *H01Q7/00*
(2006.01)i

According to International Patent Classification (IPC) or to both national classification and IPC

B.  FIELDS SEARCHED

Minimum documentation searched (classification system followed by classification symbols)
H01Q9/02, G06K19/07, H01Q1/38, H01Q7/00

Documentation searched other than minimum documentation to the extent that such documents are included in the fields searched
Jitsuyo Shinan Koho        1922–1996   Jitsuyo Shinan Toroku Koho    1996–2012
Kokai Jitsuyo Shinan Koho   1971–2012   Toroku Jitsuyo Shinan Koho    1994–2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2006-053833 A  (Fujitsu Ltd.),<br>23 February 2006 (23.02.2006),<br>entire text; all drawings<br>& US 2006/0032926 A1     & US 2008/0122630 A1<br>& EP 1626364 A2          & EP 1947733 A1<br>& EP 2190060 A2 | 1-10 |
| Y | WO 2010/079830 A1  (Murata Mfg. Co., Ltd.),<br>15 July 2010 (15.07.2010),<br>entire text; all drawings<br>(Family: none) | 1-10 |
| Y | WO 2009/004666 A1  (Fujitsu Ltd.),<br>08 January 2009 (08.01.2009),<br>entire text; all drawings<br>& US 2010/0072287 A1     & EP 2164131 A1 | 4,5 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 June, 2012 (19.06.12) | 26 June, 2012 (26.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 833 477 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006053833 A